# EUROPÄISCHE PATENTSCHRIFT

(11) **EP 2 537 689 B1**
(45) Veröffentlichungstag und Bekanntmachung des Hinweises auf die Patenterteilung: **14.05.2014**
(21) Anmeldenummer: 11171091.9
(22) Anmeldetag: 22.06.2011
(51) Int. Cl.: B60C 23/04

(54) **Automatisierte Positionsbestimmung von Rädern in Reifendruckkontrollsystemen**
Automated positioning of wheels in tyre pressure control systems
Détermination automatisée de la position des roues dans des systèmes de contrôle de la pression des pneus

(43) Veröffentlichungstag der Anmeldung: 26.12.2012
(73) Patentinhaber: Huf Hülsbeck & Fürst GmbH & Co. KG, 42551 Velbert (DE)
(72) Erfinder: Gennermann, Sven, 42553 Velbert (DE); Simon, Jörg, 42489 Wülfrath (DE); Garcia Valenzuela, Edwin, 51109 Köln (DE)
(74) Vertreter: Zenz

(56) Entgegenhaltungen:
- DE-A1-102007 063 057
- US-A1- 2009 015 393

## Beschreibung

Die Erfindung betrifft ein Verfahren und eine Einrichtung zur automatischen Bestimmung der Montagepositionen von Rädern an Kraftfahrzeugen, welche mit Reifendrucksensoren für Reifendruckkontrollsysteme ausgestattet sind.

Reifendruckkontrollsysteme (RDKS) oder tire pressure monitoring systems (TPMS) erlauben die automatisierte Überwachung des Reifendrucks bei Kraftfahrzeugen. Der Druck der einzelnen auf die Räder gezogenen Reifen kann zu diskreten Zeiten oder zyklisch oder kontinuierlich überwacht werden und der Fahrer kann vor gefährlichem Druckverlust oder auch übermäßigem Druck in den Reifen gewarnt werden.

Im Rahmen dieser Erfindung sind direkt messende Systeme betroffen, bei denen an jedem der Räder ein Drucksensor den Luftdruck im Reifen überwacht. Gegebenenfalls wird zusätzlich zu dem Luftdruck auch die Lufttemperatur gemessen. Die Reifendrucksensoren bei derartigen Systemen sind so ausgebildet, dass sie über eine Funkverbindung mit einem Steuergerät im Fahrzeug kommunizieren können und die ermittelten Messwerte zusammen mit einer Identifikation des Drucksensors an das Fahrzeug übermitteln. Derartige Reifendruckkontrollsysteme sind in einigen Ländern bereits für Neufahrzeuge vorgeschrieben.

Ein System zur Überwachung des Reifluftdruckes ist beispielsweise aus der EP 05 014 301 bekannt. Ein anderes System mit gleichem Zweck ist in der EP 1 110 764 beschrieben.

Die Messung des Reifendrucks über die Sensoren läuft üblicherweise unproblematisch, da die Messdaten über eine kabellose Funkverbindung an das Fahrzeug gesendet werden. Eine mögliche Fehlerquelle bei diesen Systemen besteht jedoch darin, dass ein fahrzeugseitiges System über fehlerhafte Informationen bezüglich der Montageposition von Rädern am Kraftfahrzeug verfügt. Bei der Montage der Räder, z.B. dem Wechsel von Sommer-und Winterreifen, ist dem Steuergerät im Fahrzeug mitzuteilen, welches Rad und damit welcher Sensor an welcher Stelle des Fahrzeugs montiert wird. Ansonsten kann es zu Fehlanzeigen im Fahrzeug kommen, insbesondere der falschen Positionszuordnung von Druckdaten zu Rädern, was ein erhebliches Sicherheitsrisiko bedeuten kann.

In bestehenden Systemen sind Reifendrucksensoren bekannt, die entsprechende Druckmessungen des Reifendrucks erlauben und die Ergebnisse dieser Druckmessungen an eine Steuereinrichtung übermitteln. Ein Beispiel eines solchen Sensors ist in der EP 2132049 beschrieben. Wie oben eingeführt, dienen Reifensensoren zur Messung unterschiedlicher Zustandsgrößen, insbesondere des Drucks und der Temperatur, zum Teil auch der Beschleunigungen des Fahrzeugreifens. Da sie nicht an externe Spannungsquellen angeschlossen werden können, sind verschiedene Systeme zur Energieversorgung und zum Reduzieren des Stromverbrauchs bekannt. Die Energieversorgung kann zum einen durch eine eingebaute Batterie erfolgen, die jedoch eine begrenzte Lebensdauer aufweist und somit die Lebensdauer des gesamten Reifensensors begrenzt. Zur Verringerung des Stromverbrauchs wird bei einigen Sensortypen eine Rollerkennung in die Radelektroniken eingebaut, bei der durch Abschalten von Teilen des Auswerte-ASICs ein Stromverbrauch reduziert wird, um die Lebensdauer der Batterie zu verlängern. Weiterhin wird bei einigen Systemen bei Nichtbewegung des Rades, z. B. des Reserverades, ein Schlafmodus der Elektronik eingeschaltet, der unnötiges Senden im Ruhemodus verhindert. Ein Reifensensor ist in einem Fahrzeugreifen , z.B. in dem Ventilbereich oder auch in der Lauffläche des Fahrzeugreifens angeordnet. Das Reifensensormodul weist eine Sensoreinrichtung auf, die als Druck-Sensor oder Druck-Temperatur-Sensor ausgebildet ist. Beispielsweise ist ein Auswerte-ASIC als Auswerte- und Steuereinrichtung vorgesehen sowie eine Batterie. Der Druck-Temperatur-Sensor nimmt in bekannter Weise Messwerte des Druckes und der Temperatur auf und gibt entsprechende Messsignale an das Auswerte-ASIC aus, d. h. er wird vom Auswerte-ASIC ausgelesen.

Das Auswerte-ASIC ist bei mit einer Sendeeinrichtung, z.B. einem Oszillator zur Erzeugung der HF-Sendefrequenz verbunden. So wertet das Auswerte-ASIC die Messsignale aus und gibt HF-Signale über eine angeschlossene Antenne an eine fahrzeugseitige Empfangseinrichtung aus. Die Antenne kann z. B. an der Innenseite und/oder Außenseite des Gehäuses des Reifensensormoduls ausgebildet sein.

Aus der EP 1 026 015 ist ein System bekannt, welches mittels eines tragbaren Gerätes die Einmessung und Zuordnung der Reifenposition nach einer Montage erlaubt, und die ermittelten Identifikationsdaten der einzelnen Räder an die Steuereinrichtung im Kraftfahrzeug übermittelt. Auch dieses System setzt allerdings eine ordnungsgemäße Handhabung voraus. Es besteht außerhalb weiterhin die Gefahr, dass das entsprechende Verfahren übergangen oder vergessen wird, obwohl die Räderposition an einem Kraftfahrzeug verändert wurde.

Die EP 1863658 schließlich offenbart ein System, bei welchem Sendeantennen ein Trigger-Signal aussenden, dessen Signalstärke an den Reifen ermittelt wird. Diese Anwendung geht davon aus, dass die Räder an einem Kraftfahrzeug jeweils Mittel zum Erfassen des Reifendrucks aufweisen und diese Mittel außerdem wiederum Mittel zum drahtlosen Übermitteln des Reifendrucks an eine fahrzeugseitige Steuereinrichtung enthalten oder mit diesem gekoppelt sind. Aus der Signalstärke wird dann eine Information über die Montageposition abgeleitet. Das System dieser Einrichtung hat jedoch aufgrund der unterschiedlichen Anordnung der Sensoren an den Reifen verbleibende Unsicherheiten der Bestimmungsgenauigkeit. Aus der Offenbarung DE 10 2007 063 057 wird der Oberbegriff vom Anspruch 1 gebildet.

Aufgabe der Erfindung ist es, ein Verfahren und eine Einrichtung zur verbesserten automatischen Einmessung und Zuordnung der Räderpositionen mit daran angeordneten Drucksensoren in einem Kraftfahrzeug vorzunehmen.

Diese Aufgabe wird erfindungsgemäß durch ein Verfahren mit den Merkmalen des Patentanspruchs 1 gelöst.

Das erfindungsgemäße Verfahren nutzt die an den Rädern angeordneten Mittel zum Empfangen von niederfrequenten Signalen, welche die Auswertung einer empfangenen Signalstärke eines empfangenen niederfrequenten Signals ermöglichen. Mit Hilfe einer fahrzeugseitigen Antenne wird ein niederfrequentes Bestimmungssignal ausgesandt und die an den Rädern befindlichen Mittel empfangen dieses Signal. An jedem Rad wird die empfangene Signalstärke mehrmals bestimmt. Wesentlich ist, dass die Bestimmung der Signalstärke nur erfolgt, wenn eine Rollbewegung des Rades erfolgt und dann über verschiedene Positionen des Sensors, welche durch das Abrollen herbeigeführt werden, eine Auswertung vorgenommen wird. Die Abrollbewegung bewirkt eine Abstandänderung zwischen Radsensor und Sendeantenne. Über die Mittelung während der Rollbewegung wird verhindert, dass eine Einmessung im stehenden Zustand zu Fehlerkennungen der Position führen kann. Eine Felge von 19 Zoll (ca. 48 cm) wird bei Rollbewegung mit dem Sensor eine Kreisbahn beschreiben, so dass signifikant unterschiedliche Signalstärkeerfassungen zu erwarten sind. Über eine Mittelung kann ein repräsentativer Wert mit erwarteten Werten für jede Montageposition verglichen werden.

Auf dem üblichen und vorgesehenen Kommunikationsweg zwischen Drucksensor und Steuereinrichtung des Kraftfahrzeuges wird dann eine hochfrequente Kommunikation ausgeführt, wobei der Drucksensor die ermittelte Signalstärke zusammen mit seiner Identifikation an das Steuergerät übersendet. Im Steuergerät selbst werden die Identifikationsdaten der einzelnen Sensoren und Räder empfangen und anhand der Signalstärken wird bestimmt, welche Montageposition zu welcher Identifikationskennung gehört. Diese Auswertung ist möglich, da die fahrzeugseitige Steuereinrichtung Kenntnisse über die Montageposition der aussendenden Antenne bzw. der aussendenden Antennen verfügt und weiß, an welchen Positionen der Räder eine bestimmte relative Signalstärke vorliegt. Diese Signalstärke ist von der Radposition abhängig und kann in Abhängigkeit von der Art des Fahrzeuges und ggf. vorhandener Aufbauten einmalig bei Auslieferung des Fahrzeuges oder bei der Ursprungsmontage in der Steuereinrichtung eingespeichert sein. Es ist beispielsweise bei Herstellung, dass eine entsprechend angeordnete Antenne eine Signalverteilung erzeugt, die an einer Radposition vorne links das stärkste niederfrequente Signal ausstrahlt, vorne rechts ein schwächeres niederfrequentes Signal empfangen lässt, hinten links ein wiederum schwächeres niederfrequentes Feld erzeugt und hinten rechts das schwächste elektromagnetische niederfrequente Feld hervorruft. In dieser Kenntnis kann die Steuereinrichtung die entsprechende Zuordnung der Räder zu den Montagepositionen ermitteln. Eine entsprechende Überprüfung nach jedem Fahrzeugstart während der Fahrt wiederholt werden.

Die Erfindung macht sich demnach zu Nutze, dass die Ausbreitung eines elektromagnetischen Feldes im niederfrequenten Bereich und eine zugehörige Signalstärkenauswertung die Positionsbestimmung der Räder an dem Kraftfahrzeug erlaubt und die auftretende Rollbewegung eine Mittelung in reproduzierbarer Weise erlaubt. Die Abstrahlcharakteristik der Antenne kann dabei durch Formgebung der Antenne, Abschirmmaßnahmen oder die Positionierung der Antenne am Kraftfahrzeug bewusst so gewählt werden, dass signifikant unterschiedliche Feldstärken des niederfrequenten Wechselfeldes bei den Montagepositionen der Räder vorliegen. Das Verfahren ist mit einer einzigen Antenne praktizierbar, es können grundsätzlich jedoch auch mehrere Antennen vorgesehen sein. Wesentlich ist, dass die Signalstärkeauswertung an den Rädern selbst erfolgt und auf Basis dieser Signalstärke Informationen einer Positionsbestimmung auf Seiten des Kraftfahrzeuges vorgenommen wird.

Da das Verfahren nicht von einem manuell initiierten oder überwachten Benutzervorgang abhängig ist, wird ein erheblicher Beitrag zur Verbesserung der Sicherheit gewährleistet. Selbst ein Wechsel der Räder, bei welchem eine nachträgliche Zuordnung im Fahrzeugsteuersystem gänzlich vergessen wird, erlaubt beim anschließenden Betrieb des Fahrzeuges und der Durchführung des automatisierten Einmessverfahrens eine eindeutige Zuordnung der Radpositionen zu dem ermittelten Druckwerten.

In einer bevorzugten Ausführung des erfindungsgemäßen Verfahrens wirft die fahrzeugseitige Steuereinrichtung für jedes der Räder eine Mehrzahl von empfangenen Signalstärken aus. Da die Rollbewegung der Räder zu einer Lageveränderung der Ventile und damit der Drucksensoren von den einzelnen Rädern gegenüber dem Kraftfahrzeugkörper und dem Steuergerät bzw. der Antenne führt, ist eine Mittelung der empfangenen Signalstärken insbesondere während der Abrollbewegung sinnvoll. Außerdem kann jedoch auch zur Beseitigung sonstiger Störeinflüsse und zur Fehlerminimierung eine wiederholte Mittelung auch im stehenden Zustand des Fahrzeuges durchgeführt werden und sinnvoll sein. Alternativ kann dazu ein dauerhaftes Bestimmungssignal ausgesandt werden und jede der Sensoreinrichtungen an den Rädern sendet wiederholt eine empfangene Signalstärke zurück oder eine Mehrzahl empfangener Signalstärken wird als Paket nach Abschluss einer vorgegebenen Anzahl von Messungen zurück übermittelt. Alternativ kann die Mittelung auch an jedem der Sensoren am Rad selbst durchgeführt werden und nur das gemittelte Ergebnis wird an die Steuereinrichtung zurück übersandt. Sofern die Räder auch noch mit Lage oder Beschleunigungssensoren ausgestattet sind, kann die Mittelung an den Rädern außerdem von den Daten dieser Einrichtungen abhängig gemacht werden. Beispielsweise kann die Mittelung dann über Werte durchgeführt werden, die anhand der Lage oder Beschleunigungssensoren verschiedenen Hartstellungen zuzuordnen sind, so dass ein möglichst repräsentatives Ergebnis über eine vollständige Rollbewegung des Rades erzeugt wird.

Als Niederfrequenzsignal kann ein Signal mit einer Frequenz von z.B. 125 kHz verwendet werden, es sind jedoch auch andere Signalfrequenzen möglich. Die Signalstärkeermittlung erfolgt nach in den Fachkreisen bekannten Verfahren. Ein entsprechendes Verfahren ist beispielsweise das RSSI-Verfahren, welches einheitenlos eine Signalstärke der empfangenen Feldstärke angibt. Obwohl die Erfindung nicht darauf angewiesen ist, kann zur Verbesserung der Verlässlichkeit von den ermittelten Informationen jedes Rad mit einem daran angeordneten Drucksensor z.B. werkstattseitig oder herstellerseitig in einer Kalibrierungsvorrichtung auf einen bestimmten Signalstärkewert kalibriert werden. Dazu kann ein zugehöriges Rad beispielsweise in einer Einrichtung eingesetzt werden, die über eine Sendeantenne mit vorgegebener Leistung im vorgegebenen Abstand verfügt, und dass von dem Ventil dazu detektierte Signal auf einem Kalibrierungswert gesetzt werden. Dies gewährleistet eine bessere Vergleichbarkeit der einzelnen Signalstärkewerte untereinander.

Die Kommunikation zwischen Steuereinrichtung und Sensor, also der Austausch der Informationen zur Identifizierung des Sensors und der empfangenen Signalstärken findet bei einer deutlich höheren Frequenz statt, z.B. bei einigen hundert MHz.

In einer bevorzugten Ausführungsform des Fahrzeuges ist die Antenne zur Aussendung des Bestimmungssignals an einer Position am Fahrzeug angeordnet, welche zu jedem der Räder eine unterschiedliche Entfernung aufweist. Beispielsweise kann die Antenne in der vorderen Fahrzeughälfte, versetzt zur Längsachse des Fahrzeuges angeordnet sein, etwa unterhalb des Fahrzeugbodens im Bereich des Beifahrersitzes. Es ist unmittelbar ersichtlich, dass zu jedem der Räder eine unterschiedliche Distanz vorhanden ist, die ggf. durch entsprechende Abschirmungen noch künstlich zu beeinflussen ist. Eine derartige Anordnung vergrößert die relativen Unterschiede der empfangenen Signalstärken an den einzelnen Rädern und erleichtert eine Zuordnung der Räder zu den Montagepositionen.

In einer bevorzugten Ausführungsform des Verfahrens werden mehrere Antennen zur Aussendung des Bestimmungssignals eingesetzt. Diese Antennen können insbesondere zeitlich versetzt eingesetzt werden und sind an unterschiedlichen Positionen am Kraftfahrzeug angeordnet. Da eine Antwort auf jede Aussendung eines Bestimmungssignals von jeder Antenne eine Rückmeldung der einzelnen Sensoren erfolgt, kann die gemeinsame Auswertung der empfangenen Signalstärken von jedem der Räder zu jeder der Antennen eine noch präzisere Auswertung der Radpositionen erlauben. Insbesondere ist es hilfreich, wenn eine der Antennen im vorderen Abschnitt des Kraftfahrzeugs angeordnet ist, während eine andere Antenne im hinteren Abschnitt des Kraftfahrzeugs und dort z.B. in der anderen Längshälfte des Fahrzeuges angeordnet ist. In jedem Fall ist es sinnvoll, die Antennen dezentral, also versetzt zur Längs- und Querachse anzuordnen, um eine möglichst asymmetrische Signalstärkeverteilung an den Radpositionen zu erreichen.

Bei einer vorteilhaften Ausführungsform der Erfindung sendet die fahrzeugseitige Steuereinrichtung das Bestimmungssignal nur dann aus, wenn weitere Fahrzeugparameter eine Fahrbewegung des Fahrzeuges und damit eine Rollbewegung der Reifen anzeigen. Das erfindungsgemäße Verfahren geht davon aus, dass eine verlässliche Bestimmung der Montageposition, insbesondere bei Verwendung weniger Antennen zur Aussendung des Bestimmungssignals, nur dann möglich ist, wenn eine Mittelung über eine Rollbewegung möglich ist. Dazu sind der Steuereinrichtung im Kraftfahrzeug verschiedene Betriebsparamter des Fahrzeugs zugänglich, insbesondere Daten zur Geschwindigkeit des Fahrzeuges. Die Aussendung des Bestimmungssignals wird nur dann initiiert, wenn ein Fahrtzustand erreicht ist, z.B. eine Mindestgeschwindigkeit überschritten ist.

In einer alternativen Gestaltung übermitteln die radseitigen Mittel nur dann eine Signalstärke an die fahrzeugseitige Steuereinrichtung, wenn mit diesen Mitteln gekoppelte Lage- oder Beschleunigungssensoren eine Rollbewegung des Rades anzeigen. Diese Anordnung und dieses Verfahren ist unabhängig von der Steuerung und deren Daten zur Fahrsituation. Die Sensoren verfügen selbst über die Mittel zur Bestimmung einer Rollbewegung des Rades. Nur wenn diese vorliegt, wird die Signalstärke des Bestimmungssignals erfasst und an die Steuereinrichtung übermittelt.

Die Erfindung wird nun anhand der beiliegenden Figuren näher erläutert.
Figur 1 zeigt eine schematische Ansicht eines Kraftfahrzeuges mit Vorrichtung zur Ausführung des erfindungsgemäßen Verfahrens;
Figur 2 zeigt ein Ablaufdiagramm gemäß einem Ausführungsbeispiel der Erfindung.

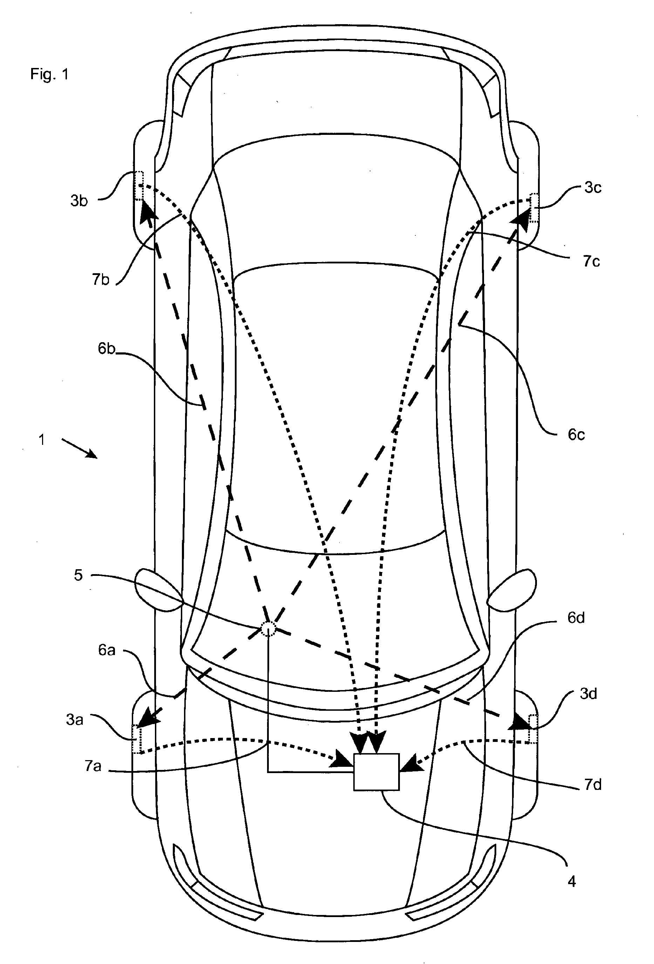

In Figur 1 ist ein Kraftfahrzeug 1 gezeigt, welches an seinen Rädern 2 Reifendrucksensoren 3a, 3b, 3c und 3d aufweist.

An dem Kraftfahrzeug ist eine Steuereinrichtung 4 ausgebildet. Mit der Steuereinrichtung 4 ist eine unterhalb des Fahrzeugs zur Abstrahlung in den Außenbereich angeordneten Antenne 5 gekoppelt. Die Steuereinrichtung 4 kann die Antenne 5 ansteuren, um ein Bestimmungssignal 5a mit einer Frequenz 125 kHz auszusenden. Die Antenne ist in diesem Beispiel mit einer Abstrahlung unterhalb des Fahrzeugbodens angeordnet und dezentral am Fahrzeug positioniert. Die Antenne 5 ist sowohl versetzt zu der Längsachse des Fahrzeuges als auch zu der mittleren Querachse des Fahrzeuges angeordnet. Die Antenne 5 weist zu jedem der Drucksensoren 3a, 3b, 3c und 3d einen anderen Abstand auf. Die Signalwege von der Antenne 5 zu den Sensoren sind durch die Pfeile 6a, 6b, 6c und 6d dargestellt. Die Drucksensoren 3a, 3b, 3c und 3d verfügen über Mittel, mit denen im Hochfrequenzbereich, also beispielsweise bei einigen hundert MHz ein Funkkommunikation mit der zentralen Steuereinrichtung 4 durchgeführt werden kann. Die diesbezüglichen Signale sind durch die Pfeile 7a, 7b, 7c und 7d bezeichnet. Die Radsensoren 3a, 3b, 3c, 3d weisen außerdem Mittel auf, welche die Lage des Sensors und die Beschleunigung erfassen können, welche auf den Sensor wirkt. Eine Erfassung des Signalstärke der Signale 6a, 6b, 6c, 6d wird von diesen Sensoren nur dann vorgenommen, wenn die Beschleunigungssensoren eine Rollbewegung anzeigen. Die Lagesensoren sorgen außerdem dafür, dass die Messung mehrmals und in verschiedenen Quadranten der Rollbewegung startend durchgeführt wird, um Signalstärken für möglichst unterschiedliche Sensorlagen zu erhalten.

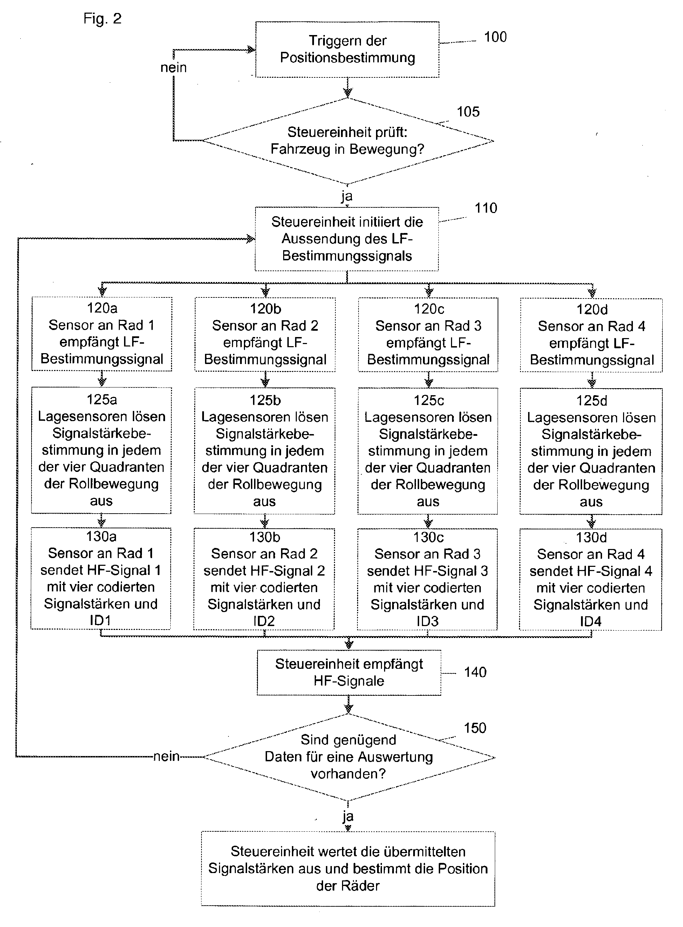

Unter Bezug auf Figur 2 wird nun ein möglicher Ablauf des erfindungsgemäßen Verfahrens bzw. ein Einsatz der erfindungsgemäßen Vorrichtung beschrieben. Das Verfahren wird in Schritt 100 gestartet, sobald die Positionsbestimmung bzw. Bestimmung der Montagestelle der Räder getriggert wird. Ein solcher Trigger kann z.B. der Start des Fahrzeuges sein oder eine explizite Auslösung, z.B. durch den Funktionsaufruf im Bedienmenü einer Kraftfahrzeugsteuerung. Es sind beliebige andere Auslöser für die Positionsbestimmungen denkbar, insbesondere ist es auch möglich die Positionsbestimmung auszulösen, sobald die Fahrgeschwindigkeit erstmals einen vorgegebenen Wert übersteigt.

In Schritt 105 prüft die Steuereinheit auf Grundlage der verfügbaren Fahrzeugparameter, ob sich das Fahrzeug in Bewegung befindet. Ist dies nicht der Fall (z.B. hat das Fahrzeug nach erstmaligem überschreiten einer Mindestgeschwindigkeit wieder angelhalten), wird auf eine erneute Triggerung gewartet oder eine Wartezeit absolviert.

Bei Schritt 110 initiiert die Steuereinrichtung 4 die Aussendung des LF-Bestimmungssignals über die Antenne 5. Das LF-Bestimmungssignal wird für eine vorgegebene Zeitdauer ausgesandt. Die Sensoren 3a, 3b, 3c empfangen in dem parallel ablaufenden Schritten 120a, 120b, 120c und 120d das LF-Bestimmungssignal und ermitteln die empfangene Signalstärke. Dabei sorgt bei Schritt 125a, 125b, 125c, 125d die Elektronik und die mit den Drucksensoren gekoppelten Lagesensoren dafür, dass eine Signalstärkebestimmung mehrmals, in jedem der Quadranten der Rollbewegung, also möglichst um jeweils 90° versetzt ausgeführt wird. Die Beschleunigungssensoren in den Rädern können außerdem dafür abgefragt werden, um die Messungen bei vergleichbaren Beschleunigungen auszuführen (was aufgrund der Rollbewegung etwa gleicher Geschwindigkeit entspricht.)

In den Sensoren wird bei 130a, 130b, 130c, 130d nach Bestimmung der Signalstärken eine Nachricht generiert, die im Hochfrequenzbereich von den jeweiligen Sensoren an die Steuereinrichtung 4 gesandt wird. Die Nachricht enthält sowohl die ermittelten Signalstärken für jeden Quadranten der Rollbewegung als auch eine eindeutige Kennung des jeweiligen Sensors. Die Steuereinheit empfängt in Schritt 140 die HF-Signale mit den codierten Informationen und ordnet die empfangenen Signalstärken den identifizierten Sensoren zu. In Schritt 150 wird geprüft, ob genügend Daten für eine zuverlässige Auswertung der Radmontagepositionen vorhanden sind. Sofern dies nicht der Fall ist, wird zu Schritt 110 zurückgekehrt und ein weiteres Bestimmungssignal ausgesandt. Sofern die Daten für eine Auswertung ausreichen, insbesondere die Auswertungsgenauigkeit in einem vorgegebenen Bereich liegt, werden die Montagepositionen ausgewertet.

Bei dem in Figur 1 dargestellten Beispiel ist es ersichtlich, dass die Übertragungsstrecke zwischen der Antenne 5 aufgrund der unterschiedlichen Entfernung zu den einzelnen Rädern bei Sensor 3a das stärkste Signal erwarten ließe. Danach folgen in absteigender Folge die Sensoren 3d, 3b und 3c. Diese Reihenfolge ändert sich, sofern die Antenne gerichtete Abstrahlwirkungen aufweist oder Abschirmungen vorhanden sind, und kann außerdem je nach Radstellung und Drehstellung der Räder variieren. Daher ist ggf. eine Wiederholung der Messung in Schritt 150, z.B. auch über mehrere Radumdrehungen erforderlich. Da die Steuereinheit jedoch über die theoretischen erwarteten Signalstärken an den Montagestellen der Räder informiert ist, kann die Signalstärkeverteilung mit diesen Werten korreliert werden und eine Zuordnung der identifizierten Sensoren zu den Radpositionen vorgenommen werden. Die Mittelung während der Rollbewegung ermöglicht auch Differenzierungen zwischen sonst nur schwer auszuwertenden Entfernungsunterschieden (z.B. Räder 3b und 3c).

Bei der Verifikation kann insbesondere auch einbezogen werden, ob bereits vorhergehende Informationen über die Zuordnung der Radpositionen vorhanden sind. Insbesondere dann, wenn die Steuereinheit eine abweichende Anordnung der Räder feststellt, kann ein extensiveres Positionsbestimmungsverfahren eingeleitet werden. Wenn also die Steuereinheit nach Auswertung feststellt, dass sich die Radpositionen geändert haben, kann dies durch einen erneuten Ablauf des Verfahrens verifiziert werden, wobei dieser Ablauf z.B. an andere Betriebsbedingungen des Fahrzeuges, z.B. bei Überschreiten einer Mindestgeschwindigkeit vorgenommen wird. Sofern keine eindeutige Auswertung möglich ist, kann dies dem Fahrzeug signalisiert werden oder alternativ eine zeitlich verzögerte erneute Auswertung vorgenommen werden.

Eine weitere Verfeinerung des Verfahrens kann erreicht werden, indem eine weitere Antenne zeitlich verzögert angesteuert wird, welche sich an anderer Position des Fahrzeugs oder an gleicher Position, jedoch mit anderer Orientierung der Antenne befinden kann. Außerdem kann beispielsweise das Reserverad, welches sich z.B. unterhalb des Fahrzeuges oder im Heckbereich befindet, in die Auswertung einbezogen werden.

Wesentlich ist bei dem erfindungsgemäßen Verfahren, dass eine Entwicklung einer empfangenen Signalstärke in den Sensoren an den Rädern erfolgt und eine Mittelung von Signalen bei Rollbewegung der Räder berücksichtigt wird und auf diese Weise eine verlässliche Verknüpfung zwischen dem vom Fahrzeug trennbaren Rädern einerseits und den unveränderlichen Fahrzeugparametern, nämlich der Montageposition der Antenne andererseits hergestellt wird.

Für die Frequenz des Bestimmungssignals sind erfindungsgemäß keine konkreten Grenzen gesetzt. Es ist jedoch erforderlich, dass einerseits die ausgesandte Signalstärke an jedem der Radsensoren in ausreichender Stärke ankommt, um eine differenzierte Signalstärkenbestimmung vorzunehmen und andererseits die Signalstärke deutlich reichweitenabhängig auch über diese Distanzen ist, so dass tatsächliche Unterschiede der detektierten Signalstärken auftreten.

Wie die Mittelung tatsächlich erfolgt ist technisch beliebig festlegbar. Beispielweise kann von der Steuereinrichtung in Kenntnis der Fahrzeuggeschwindigkeit ein längeres Bestimmungssignal ausgesandt werden, welches einer Mehrzahl von Umdrehungen der Räder entspricht. Die Sensoren empfangen das Bestimmungssignal und integrieren die Signalstärke über die gesamte Empfangsdauer aus. Nachdem kein Signal mehr in den Sensoren detektiert wird, senden die Sensoren die aufintegrierte Signalstärke zurück. Andererseits können die bekannten Techniken der RSSI (Received Signal Strength Indication) Verwendung finden. Dann können z.B. zahlreiche momentane Werte, die von den Sensoren in kurzen Messzyklen erfasst und übertragen wurden, in der Steuereinrichtung gemittelt werden. Die Erfindung ist hinsichtlich der Anordnung der Steuereinrichtung und der Anzahl oder Anordnung von Antennen zur Aussendung des Bestimmungssignals nicht beschränkt. Insbesondere kann die Antenne bzw. können die Antennen an anderen Positionen außerhalb des Kraftfahrzeuges, z.B. im Bereich der Türgriffe oder Außenspiegel angeordnet sein.

## Patentansprüche

1. Verfahren zur automatisierten Bestimmung der Montageposition von Rädern an Kraftfahrzeugen, wobei die Räder jeweils Mittel zum Erfassen des Reifendruckes aufweisen und wobei diese Mittel jeweils mit Mitteln zum drahtlosen Übermitteln des Reifendruckes an eine fahrzeugseitige Steuereinrichtung gekoppelt sind und jeweils Mittel zum Empfangen von niederfrequenten Signalen aufweisen, welche zur Auswertung einer Signalstärke der empfangenen niederfrequenten Signale ausgebildet sind, wobei
mit mindestens einer fahrzeugseitigen Antenne ein niederfrequentes Bestimmungssignal ausgesandt wird, wobei
mit den Mitteln zum Empfangen von niederfrequenten Signalen an jedem der Räder eine Signalstärke des Bestimmungssignals ermittelt wird,
**dass** mit den Mitteln zum drahtlosen Übermitteln des Reifendrucks von jedem Rad eine hochfrequente Datenübermittlung an die fahrzeugseitige Steuereinrichtung initiiert wird, **dadurch gekennzeichnet,**
**dass** die Datenübermittlung mindestens eine dem jeweiligen Rad zugeordnete ermittelte Signalstärke des Bestimmungssignals enthält und für jedes Rad während einer Rollbewegung des Rades eine Mehrzahl von Signalstärken des Bestimmungssignals über verschiedene Positionen der Mittel zum Erfassen des Reifendruckes und zum Empfangen von niederfrequenten Signalen erfasst und ein radspezifischer Mittelwert gebildet wird.

2. Verfahren nach Anspruch 1, wobei mit der fahrzeugseitigen Steuereinrichtung für jedes der Räder die Mehrzahl von empfangenen Signalstärken empfangen und der Mittelwert gebildet wird.

3. Verfahren nach Anspruch 1, wobei die Mittel zum Empfangen von niederfrequenten Signalen die Mehrzahl von Signalstärken ermitteln und aus dieser Mehrzahl von Signalstärken einen gemittelte Signalstärke generieren, welche an die fahrzeugseitige Steuereinrichtung gesandt wird.

4. Verfahren nach einem der vorangehenden Ansprüche, wobei das Bestimmungssignal mit einer am Fahrzeug angeordneten Antenne ausgesandt wird, welche an einer Position am Fahrzeug angeordnet wird, die zu jedem der Räder eine unterschiedliche Entfernung aufweist.

5. Verfahren nach einem der Ansprüche 1 bis 4, wobei das Bestimmungssignal von mehreren zur Zugangskontrolle am Fahrzeug angeordneten Antennen ausgesandt wird.

6. Verfahren nach einem der Ansprüche 1 bis 5, wobei die fahrzeugseitige Steuereinrichtung das Bestimmungssignal aussendet, wenn weitere Fahrzeugparameter eine Fahrbewegung des Fahrzeuges und damit eine Rollbewegung der Reifen anzeigen.

7. Verfahren nach einem der Ansprüche 1 bis 5, wobei die radseitigen Mittel nur dann eine Signalstärke an die fahrzeugseitige Steuereinrichtung übermitteln, wenn mit diesen Mitteln gekoppelte Lage- oder Beschleunigungssensoren eine Rollbewegung des Rades anzeigen.

## Claims

1. A method for the automated determining of the mounting position of wheels on motor vehicles, wherein the wheels have respectively means for detecting the tyre pressure and wherein these means are respectively coupled with means for the wireless transmission of the tyre pressure to a control device on the vehicle and respectively have means for receiving low-frequency signals, which are configured for the evaluation of a signal strength of the received low-frequency signals, wherein
a low-frequency determination signal is emitted by at least one antenna on the vehicle, wherein
a signal strength of the determination signal is ascertained by the means for receiving low-frequency signals on each of the wheels,
that a high-frequency data transmission is initiated to the control device on the vehicle by the means for the wireless transmission of the tyre pressure from each wheel, **characterized in that**
the data transmission contains at least one ascertained signal strength of the determination signal, associated with the respective wheel, and for each wheel during a rolling motion of the wheel a plurality of signal strengths of the determination signal is detected over various positions of the means for detecting the tyre pressure and for receiving low-frequency signals, and a wheel-specific mean value is formed.

2. The method according to Claim 1, wherein for each of the wheels the plurality of received signal strengths is received by the control device on the vehicle and the mean value is formed.

3. The method according to Claim 1, wherein the means for receiving low-frequency signals ascertain the plurality of signal strengths and from this plurality of signal strengths generate an averaged signal strength which is transmitted to the control device on the vehicle.

4. The method according to one of the preceding claims, wherein the determination signal is emitted by an antenna arranged on the vehicle, which is arranged at a position on the vehicle which has a different distance from each of the wheels.

5. The method according to one of Claims 1 to 4, wherein the determination signal is emitted by several antennae arranged for access control on the vehicle.

6. The method according to one of Claims 1 to 5, wherein the control device on the vehicle emits the determination signal when further vehicle parameters indicate a travelling motion of the vehicle and thereby a rolling motion of the tyres.

7. The method according to one of Claims 1 to 5, wherein the means at the wheels only transmit a signal strength to the control device on the vehicle when position- or acceleration sensors coupled with these means indicate a rolling motion of the wheel.

## Revendications

1. Procédé de détermination automatisée de la position de montage des roues sur des véhicules automobiles, dans lequel les roues présentent respectivement des moyens pour détecter la pression des pneus et dans lequel ces moyens sont respectivement couplés à des moyens de transmission sans fil de la pression des pneus à un dispositif de commande du côté du véhicule et présentent respectivement des moyens de réception de signaux à basse fréquence, qui sont conçus afin d'évaluer une intensité de signal des signaux à basse fréquence reçus, dans lequel un signal de détermination à basse fréquence est émis par au moins une antenne du côté du véhicule, dans lequel une intensité de signal du signal de détermination est déterminée avec des moyens de réception de signaux basse fréquence sur chacune des roues, en ce que avec les moyens de transmission sans fil de la pression des pneus à partir de chaque roue une détermination de données à haute fréquence est amorcée sur le dispositif de commande du côté du véhicule, **caractérisé en ce que** la détermination des données contient au moins une intensité de signal du signal de détermination, déterminée de manière coordonnée à la roue respective et pour chaque roue pendant un mouvement de roulement de la roue, une pluralité d'intensités de signal du signal de détermination est détectée via différentes positions des moyens de détection de la pression des pneus et de réception des signaux à basse fréquence et une valeur moyenne spécifique à la roue est formée.

2. Procédé selon la revendication 1, dans lequel avec le dispositif de commande du côté du véhicule pour chacune des roues la pluralité d'intensité de signal reçues est reçue et la valeur moyenne est formée.

3. Procédé selon la revendication 1, dans lequel les moyens de réception de signaux à basse fréquence déterminent la pluralité d'intensités de signal et génèrent à partir de cette pluralité d'intensités de signal une intensité de signal moyenne, qui est envoyée au dispositif de commande du côté du véhicule.

4. Procédé selon une des revendications précédentes, dans lequel le signal de détermination est émise avec une antenne disposée sur le véhicule, qui est disposée sur le véhicule à une position, qui présente un éloignement différent par rapport à chacune des roues.

5. Procédé selon une des revendications 1 à 4, dans lequel le signal de détermination est émis par plusieurs antennes disposées sur le véhicule à des fins de contrôle d'accès.

6. Procédé selon une des revendications 1 à 5, dans lequel le dispositif de commande du côté du véhicule émet le signal de détermination, quand des paramètres du véhicule supplémentaires affichent un mouvement de conduite du véhicule et donc un mouvement de roulement des pneus.

7. Procédé selon une des revendications 1 à 5, dans lequel les moyens du côté des roues déterminent une intensité de signal sur le dispositif de commande du côté du véhicule seulement quand les capteurs de position ou d'accélération couplés à ces moyens affichent un mouvement de roulement de la roue.
